# EUROPEAN PATENT APPLICATION

(11) **EP 4 610 841 A1**
(43) Date of publication of application: **03.09.2025**
(21) Application number: 23881479.2
(22) Date of filing: 07.09.2023
(51) Int. Cl.: G06F 16/174

(54) **FILE PROCESSING METHOD AND DEVICE, STORAGE MEDIUM AND COMPUTER EQUIPMENT**

(30) Priority: 24.10.2022 CN 202211305597
(71) Applicant: Shenzhen TCL New Technology Co., Ltd., Shenzhen, Guangdong 518052 (CN)
(72) Inventor: CHEN, Bing, Shenzhen, Guangdong 518052 (CN)
(74) Representative: Murgitroyd & Company
(86) International application number: PCT/CN2023/117371
(87) International publication number: WO 2024/087898

(57) **Abstract**

The present application discloses a file processing method, which includes: obtaining an original file to be transmitted; converting the original file into bytes to obtain a byte array; saving the byte array onto a canvas using a multi-channel storage method and compressing it to obtain multi-channel data; determining data with the smallest data volume among the multi-channel data and the byte array as the data to be encrypted, performing encryption processing on the data to be encrypted to obtain encrypted data of the original file. It can achieve a balance between compression and encryption.

## Description

This application claims priority to Chinese Patent Applications No. 202211305597.1, filed on October 24, 2022 and entitled "FILE PROCESSING METHOD AND DEVICE, STORAGE MEDIUM AND COMPUTER EQUIPMENT". The entire disclosures of the above application are incorporated herein by reference.

### TECHNICAL FIELD

This application relates to the field of data processing technologies, and in particular to a file processing method and device, a storage medium, and a computer equipment.

### BACKGROUND

With the development of technology, user's requirement for confidentiality and speed of data during transmission becomes higher and higher. For example, in some scenarios where data is sensitive but the network environment is poor and unsafe, when private data transmission or files uploading and downloading is needed, some problems may occur. These problems include long transmission time, private data or files content hijacking during the transmission, or attacks on the sever-side database which will lead to file content leaks. To optimize transmission time and reduce bandwidth usage, data or files are usually compressed. Additionally, to prevent data or file leaks, data or files are usually encrypted.

### Technical Problem

Compression is a process that reduces information entropy, while encryption is a process that increases information entropy. But if the degree of information entropy increase is larger than that of information entropy decrease, the compression becomes meaningless.

### SUMMARY OF INVENTION

Some embodiments of the present application provide a file processing method and device, a storage medium, and a computer equipment, which can achieve a balance between compression and encryption to a certain extent.

Some embodiments of the present application provide a file processing method, comprising: obtaining an original file to be transmitted; converting the original file into bytes to obtain a byte array; saving the data from the byte array onto a canvas using one-channel storage method, two-channel storage method and three-channel storage method, and compressing the data using compression method supported by the canvas to obtain compressed one-channel data, two-channel data and three-channel data, the canvas is configured to display multiple pixels; determining the data with smallest data volume among the one-channel data, the two-channel data, the three-channel data and the byte array as the data to be encrypted corresponding to the byte array.

The present application further provides a file processing method, which includes: obtaining encryption data of an original file, the encryption data is obtained by: converting the original file into bytes, and after obtaining a byte array, saving data from the byte array onto a canvas through one-channel storage method, two-channel storage method and three-channel storage method respectively, and compressing the data using compression method supported by the canvas to obtain compressed one-channel data, two-channel data and three-channel data; determining data with smallest data volume among the one-channel data, the two-channel data, the three-channel data and the byte array as data to be encrypted corresponding to the byte array; and performing encryption processing on the data to be encrypted; decrypting the encrypted data to obtain decrypted data of the original file; when the decrypted data has been compressed, writing the decrypted data into a canvas for decompression to obtain a byte array corresponding to the encrypted data; converting the byte array according to a file type to obtain the original file.

The present application further provides a file processing device, which includes: a first acquisition module, configured to obtain the original file to be transmitted; a byte conversion module, configured to convert the original file into bytes to obtain a byte array; a compression module, configured to save the data from the byte array onto the canvas through one-channel storage method, two-channel storage method and three-channel storage method respectively; and compressing the data using compression method supported by the canvas to obtain compressed one-channel data, two-channel data and three-channel data, the canvas is configured to display multiple pixels; a data determination module, configured to determining the data with the smallest data volume among the one-channel data, the two-channel data, the three-channel data and the byte array as the data to be encrypted corresponding to the byte array; an encryption module, configured to perform encryption processing on the data to be encrypted, to obtain the encrypted data of the original file.

The present application further provides a file processing device, which includes: a second acquisition module, configured to obtain encryption data of an original file, the encryption data is obtained by: converting the original file into bytes, and after obtaining a byte array, saving data from the byte array onto a canvas through one-channel storage method, two-channel storage method and three-channel storage method respectively, and compressing the data using compression method supported by the canvas to obtain compressed one-channel data, two-channel data and three-channel data; determining data with the smallest data volume among the one-channel data, the two-channel data, the three-channel data and the byte array as data to be encrypted corresponding to the byte array; and performing encryption processing on the data to be encrypted; a decryption module, configured to decrypt the encrypted data to obtain decrypted data of the original file; the decompression module, configured to: when the decrypted data has been compressed, write the decrypted data into a canvas for decompression to obtain a byte array corresponding to the encrypted data; the conversion module, configured to convert the byte array according to a file type to obtain the original file.

The present application further provides a computer-readable storage medium, wherein a plurality of instructions are stored in the computer readable storage medium, the instructions being adapted to be loaded by a processor to perform any operations of the file processing method above.

The present application further provides a computer equipment, wherein the computer equipment comprises a processor and a memory, the processor being electrically connected with the memory, the memory being configured to store instructions and data, and the processor being configured to perform any operations of the file processing method above.

### Beneficial Effects

The file processing method, device, computer-readable storage medium and equipment provided in this application obtain an original file to be transmitted, convert the original file into bytes to obtain a byte array, save the data from the byte array onto a canvas through one-channel storage method, two-channel storage method and three-channel storage method respectively, and compress the data using compression method supported by the canvas to obtain compressed one-channel data, two-channel data and three-channel data, the canvas is configured to display multiple pixels; determining data with the smallest data volume among the one-channel data, the two-channel data, the three-channel data and the byte array as data to be encrypted corresponding to the byte array; perform encryption processing on the data to be encrypted to obtain encrypted data of the original file. The byte array corresponding to the original file can be saved onto the canvas according to different methods, and then compressed according to the compression method supported by the canvas. The data with the smallest data volume is determined as the date to be encrypted from the data obtained after compression and the original byte array, which can ensure that the data volume before encryption is minimized and the information entropy is reduced to the greatest extend. Even if the data to be encrypted is further encrypted, the increase in information entropy is limited. Therefore, the increase in information encryption can be minimized, and a balance between compression and encryption can be achieved to a certain extent. When the encryption data of the original file is transmitted, the transmission speed can be increase and confidentiality can be improved.

### BRIEF DESCRIPTION OF THE DRAWINGS

The technical solutions of this application and other beneficial effects will become obvious through the detailed description of the specific implementation manners of this application in combination with the accompanying drawings.
FIG. 1 is a schematic diagram of an application scenario provided in some embodiments of the present application.
FIG. 2 is a schematic flowchart of the file processing method provided in some embodiments of the present application.
FIGs. 3a, 3b, 3c and 3d are schematic diagrams of the file type coding mapping provided in some embodiments of the present application.
FIG. 4 is a schematic flowchart of the file processing method provided in some embodiments of the present application.
FIG. 5 is another schematic flowchart of the file processing method provided in some embodiments of the present application.
FIG. 6 is another schematic flowchart of the file processing method provided in some embodiments of the present application.
FIG. 7 is a schematic diagram of the file processing apparatus provided in some embodiments of the present application.
FIG. 8 is another schematic diagram of the file processing apparatus provided in some embodiments of the present application.
FIG. 9 is a schematic diagram of the computer device provided in some embodiments of the present application.
FIG. 10 is another schematic diagram of the computer device provided in some embodiments of the present application.

### DETAILED DESCRIPTION OF THE EMBODIMENTS

The technical solution in the embodiments of the present application will be clearly and completely described below with reference to the accompanying drawings in the embodiments of the present application. Apparently, the described embodiments are only some of the embodiments of the present application, but not all the embodiments. Based on the embodiments in the present application, all other embodiments obtained by those skilled in the art without making creative efforts shall fall within the scope of protection of the present application.

Some embodiments of the present application provide a file processing method and apparatus, a storage medium, and a computer device. Any file processing device provided by Some embodiments of the present application can be integrated into computer equipment, which can be terminal or a server. The terminal includes, but is not limited to, smart phones, Pad (tablets), handheld computers, smart wearable devices, smart robots, smart in-vehicle devices, personal computer (PC), etc. The server can be a standalone server, a server cluster composed of multiple physical servers, or a cloud server providing basic cloud computing services such as cloud services, cloud databases, cloud computing, cloud functions, cloud storage, network services, as well as big data and artificial intelligence platforms.

Environments that support canvases exist in computer devices, for example, the canvase can be a Canvas, the environment that supports canvases can be a browser environment. For instance, there is a browser within the computer device, the browser supports the Canvas, allowing multiple pixels to be displayed through the Canvas. In some embodiments of the present application, the browser environment and Canvas are used as an example for illustration.

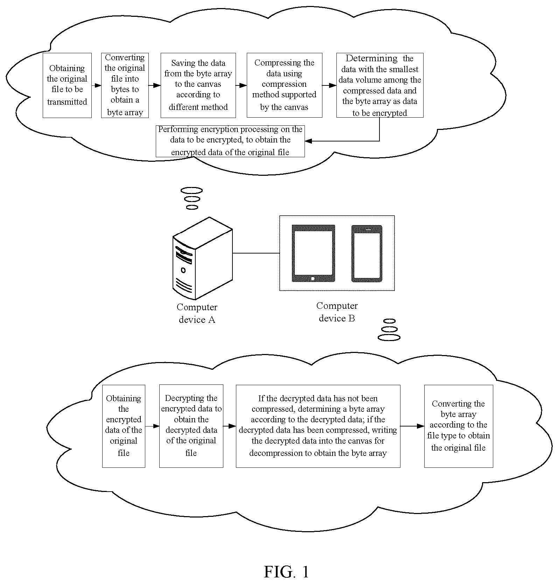

FIG. 1 is a schematic diagram of an application scenario provided in some embodiments of the present application. The application scenario includes computer device A and computer device B, the computer device A is the sender of file or data, while the computer device B is the receiver of file or data. The sender and the receiver establish a communication link via the internet. In other embodiments, the computer device A can be the receiver of file or data, and computer device B can be the sender of file or data.

At the sender's end, an original file to be transmitted is obtained, and the original file is converted into a byte array. The data of the byte array can be saved onto a canvas using different storage methods separately, such as the one-channel storage method, the two-channel storage method, and the three-channel method. Then the data is compressed separately using the method supported by the canvas to obtain the compressed data, such as one-channel data, two-channel data and three-channel data. The data with the smallest data volume, selected from the one-channel data, the two-channel data, the three-channel data and the byte array, is designated as the data to be encrypted. This data is then encrypted to obtain the encryption data of the original file, which is sent to the receiver over the internet.

By selecting the data with the smallest data volume from the one-channel data, the two-channel data, the three-channel data and the byte array as the data to be encrypted, it can ensure that the corresponding data volume before encryption is the least, and thereby the information entropy can be reduced to the greatest extent. Even if the data to be encrypted undergoes further encryption, the increase in information entropy is limited. The information entropy increase can be reduced to the greatest extent, and a balance between compression and encryption can be achieved. Then when the encrypted data of the original file is transmitted, transmitting speed and confidentiality will be improved.

In the receiver's end, the encrypted data corresponding to the original file is received, and then the encrypted data is decrypted to obtain the decrypted data. If the encrypted data is not compressed, the corresponding byte array is determined based on the decrypted data. If the encrypted data is compressed, the decrypted data is written to the canvas for decompression to obtain the byte array. And then the byte array is converted according to the file type to obtain the original file.

Some embodiments of the present application provide an integrated solution for file compression, encryption, decryption, and decompression in a browser environment. It can achieve a balance between compression and encryption to a certain extent, offering wide applicability, especially for large file processing in a browser environment. It should be noticed that, in the current technology, there are very few integrated solutions for encryption and compression for large file processing on the web.

Details of the file processing method, apparatus, storage medium, and computer device in the embodiments of the present application are introduced below.

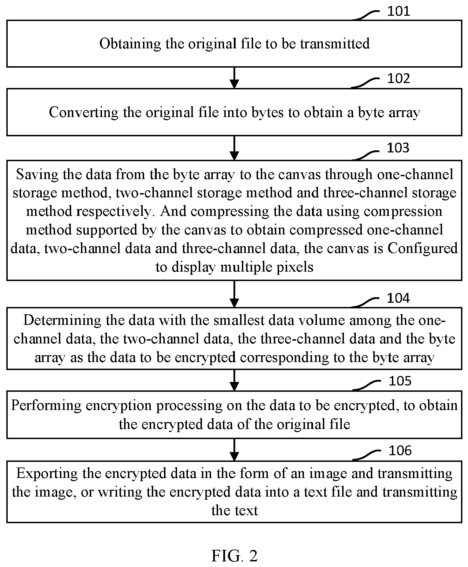

FIG. 2 is a schematic flowchart of the file processing method provided in some embodiments of the present application. The file processing method is written from the perspective of the sender, and is applied to computer equipment. It specifically includes the following operations:
101, Obtaining the original file to be transmitted.

For example, the original file to be transmitted can be selected locally. The file type of the file to be transmitted may be obtained, which may be used later in the operation of filling the identification code introduced in later sections.

102, Converting the original file into bytes to obtain a byte array.

For example, the original file can be converted into bytes through system-provided interfaces such as the FileReader interface, to obtain byte array. For instance, the original file can be converted into a Blob (binary large object) type through the FileReader interface to obtain a Blob object. The memory data, such as ArrayBuffer data, can be read through the Blob object to obtain a byte array.

103, Saving the data from the byte array to the canvas through one-channel storage method, two-channel storage method and three-channel storage method respectively, and compressing the data using compression method supported by the canvas to obtain compressed one-channel data, two-channel data and three-channel data. The canvas is configured to display multiple pixels.

Specifically, the canvas can be a Canvas, which can be used to draw a variety of content and display multiple pixels. Each pixel in the Canvas consists of an red (R) channel, a green ( G ) channel, a blue ( B ) channel and an alpha channel. In some embodiments of the present application, it is illustrated by taking the case where each channel corresponds to one byte as an example, correspondingly, the data stored in each byte can range from 0 to 255. In other embodiments, the number of bytes corresponding to each channel can be different, for example, each channel can correspond to two bytes.

In this embodiment, there is no need to perform block processing on the byte data. For example, the Canvas is not limited by size, it can store data of any size. Alternatively, in this embodiment, there are other situations where block processing of the byte array is not required. In some other embodiments, the Canvas has a size limitation, therefore, block processing of the byte data needs to be carried out, and corresponding embodiments will be provided later for illustration.

The one-channel storage method can be applied through any one of the R channel, the G channel and the B channel. The two-channel storage method can be applied through any two of the R channel, the G channel and the B channel. The three-channel storage method is applied through the R channel, the G channel and the B channel.

The operation of saving the data from the byte array onto the canvas through one-channel storage method, two-channel storage method and three-channel storage method respectively, includes:
Determining one or more target storage channels for the one-channel storage method, the two-channel storage method and the three-channel storage method, respectively. For example, the corresponding target storage channel for the one-channel storage method is any one of the R, G, and B channels, such as the R channel. The corresponding target storage channel for the two-channel storage method are any two of the R, G, and B channels, such as the R and G channels. The corresponding target storage channel for the three-channel storage method are the R, G, and B channels.

Writing the target storage channel into the identification code, and filling the identification code into the first pixel of the canvas.

Saving the data from the byte array sequentially into the target storage channel corresponding to the other pixels except for the first pixel.

The identification code can be represented by Magic code. The Magic code includes four identifiers. The first identifier, identifier 1, represents the selected target storage channel(s) and/or the number of the target storage channels. The second identifier, identifier 2, represents file type code. The third identifier, identifier 3, starts from 0, and represents the block index. The fourth identifier, identifier 4, represents 255. These four identifiers can be stored in a single pixel, for example, they can be saved to the R, G, B and alpha channels respectively. For example, the value of identification code (Magic Code) could be (2, 15, 1, 255), which represents respectively: the number of the target storage channels, which is 2 and corresponds to R and G channels; file type code, which is 15; the second block of the original file; the identifier 4, which is filled with 255. Additionally, if the corresponding block index of the original file after segmentation is only 0, it indicates that the original file consists of only one block.

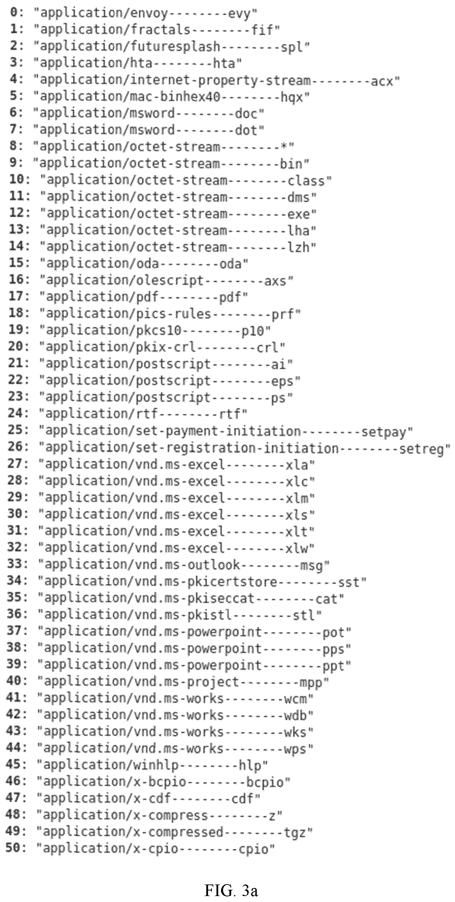

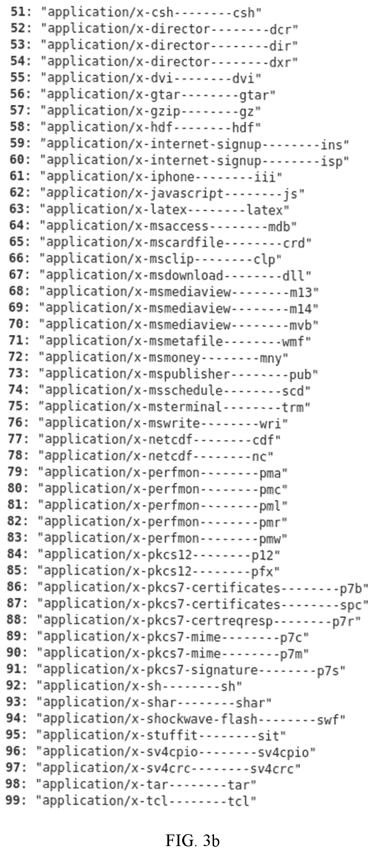

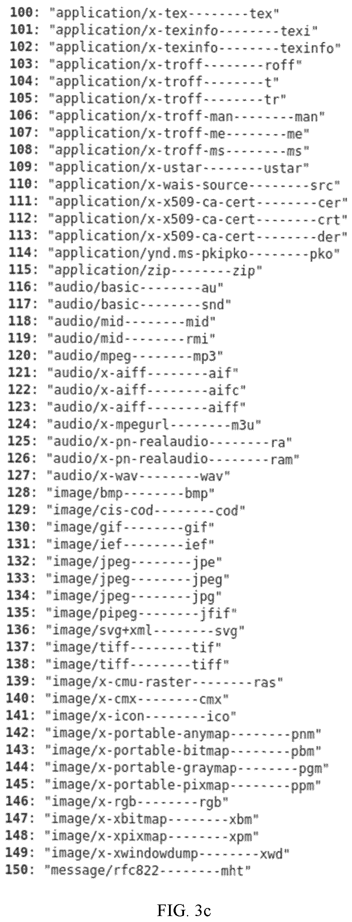

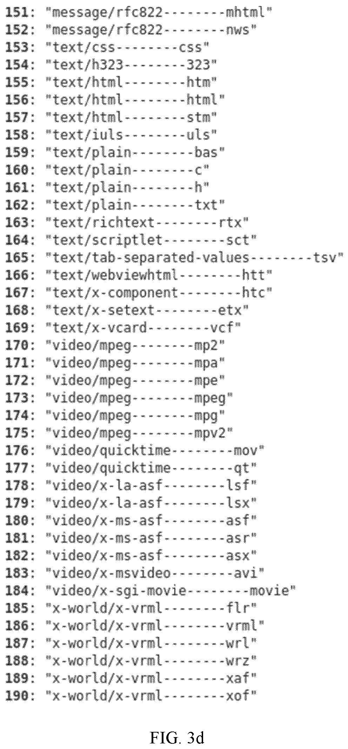

In some embodiments of the present application, each different type file is separately encoded to generate a file type code mapping table. -FIG. 3a, FIG. 3b, FIG. 3c, and FIG. 3d illustrate codes corresponding to 191 different file types, respectively. For example, the type code 15 specifically corresponds to the oda file type.

The size of the block index is related to number of bytes of each channel. Since the number of bytes of each channel is one in some embodiments of the present application, if the block index starts from 0, the corresponding maximum block index is 255, meaning the original file to be transmitted can be divided into up to 256 blocks. Block division is conducted due to the size limitation of browser-supported Canvas. If the browser-supported Canvas has no size limitation, block division is unnecessary, and the corresponding block index is 0.

Identifier 4 is stored using the alpha channel of the pixel. Due to the existence of the Premultiplied Alpha mechanism in modern browsers, if the value of the alpha channel is not equal to 255, the three values of the R, G, B channels may change after the image is generated because they participate in the calculation with the value of alpha channel, resulting in distortion during data restoration. Therefore, the value of the identifier 4 of the identification code is 255. Meanwhile, the channels involved in the channel storage method are only the R, G, and B channels, that is, the real data can only be stored in the R, G, and B channels, and not in the alpha channel.

If the target storage channel corresponding to the one-channel storage method is the R channel, the target storage channel is written into the first identifier (identifier 1) of the identification code, and the identification code is filled into the first pixel of the canvas, that is, it is inserted into the beginning of the ImageDate. Then the data from the byte array can be saved sequentially into the R channel corresponding to the other pixels of the canvas. Since the first pixel is already occupied, it can not store the data from the byte array. Starting from the second pixel, the data from the byte array is filled into the first position of the ImageDate, that is, the R channel.

If the target storage channels corresponding to the two-channel storage method are the R and B channels, the target storage channels are written into the first identifier (identifier 1) of the identification code, and the identification code is filled into the first pixel of the canvas, that is, it is inserted into the beginning of the ImageDate. Then, starting from the second pixel, the data from the byte array is filled into the first position and the second position of the ImageDate, that is, the data from the byte array is stored into the R and G channels corresponding to the pixels.

If the target storage channels corresponding to the three-channel storage method are the R, G and B channels, the target storage channels are written into the first identifier (identifier 1) of the identification code, and the identification code is filled into the first pixel of the canvas. Then, starting from the second pixel, the data from the byte array is filled into the first position, the second position and the third position of the ImageDate, that is, the data from the byte array is stored into the R and B channels corresponding to the pixels.

The second identifier (identifier 2) of the identification code can be determined after the original file to be transmitted is obtained. Specifically, the file type corresponding to the original file is determined, and then the file type code corresponding to the file type is determined, and the second identifier of the identification code is filled with the file type code. For the third identifier (identifier 3) of the identification code, if no block division is performed, the corresponding value is 0, and the third identifier of the identification code is directly filled with 0. If block division is carried out, the third identifier of the identification code is filled with the corresponding block index, which is the index of the split block. The fourth identifier (identifier 4) of the identification code is directly filled with 255.

It should be noted that the identification code can also include other content. For example, it can include information such as the unique identifier of the original file to be transmitted, and another pixel can be used to represent the corresponding information such as the unique identifier.

The part about the identification code will not be repeated later.

After saving the data from the byte array onto the canvas according to the one-channel storage method, the two-channel storage method and the three-channel storage method respectively, the data is compressed using the compression method supported by the canvas. For example, the data is compressed through the toBlod interface of the Canvas to obtain the compressed one-channel data, two-channel data and three-channel data respectively. Then, the compression ratios of the one-channel data, two-channel data and three-channel data are calculated respectively, or the data volumes corresponding to the one-channel data, two-channel data and three-channel data are counted, respectively.

104, determining the data with the smallest data volume among the one-channel data, the two-channel data, the three-channel data and the byte array as the data to be encrypted corresponding to the byte array.

The data volumes corresponding to the one-channel data, the two-channel data, the three-channel data and the byte array are respectively determined, and the data with the smallest data volume among the one-channel data, the two-channel data, the three-channel data and the byte array is determined as the data to be encrypted corresponding to the byte array. For example, if the one-channel data has the smallest data volume among the one-channel data, the two-channel data, the three-channel data and the byte array, then the one-channel data is used as the data to be encrypted. If the data in the byte array has the smallest data volume among the one-channel data, the two-channel data, the three-channel data and the byte array, which means that the data volumes after compression using these three compression methods are large than the data volume before compression. In this case, no compression method will be used, and the original data, that is, the data in the byte array will be used, and the identifier code Magic Code will be added to the byte array to obtain the data to be encrypted. Here, the value of the first identifier of the identifier code Magic Code is 0, which means no compression has been performed.

105, Performing encryption processing on the data to be encrypted, to obtain the encrypted data of the original file.

In some embodiments of the present application, the encryption processing can be any encryption processing method that allows data to be restored after encryption and causes relatively small information entropy increase.

In this embodiment, the byte array corresponding to the original file is saved onto the canvas according to different methods, and then compressed according to the compression method supported by the canvas. The data with the smallest data volume is determined as the date to be encrypted from the data obtained after compression and the original byte array. This can ensure that the data volume before encryption is minimized and the information entropy is reduced to the greatest extend. Even if the data to be encrypted is further encrypted, the increase in information entropy is limited, the increase in information encryption can be minimized, and a balance between compression and encryption can be achieved to a certain extent. When the encryption data of the original file is transmitted, the transmission speed can be increased and confidentiality can be improved.

In other embodiment provided by the present application, the encryption processing is exemplified by the method of row transformation and/or column transformation. The encryption processing method of row transformation and/or column transformation results in limited information entropy increase, and there is no need to perform iterative operations on each data (especially in the case of large amount of data, it can improve the speed and reduce the entropy increase). The key does not need to be involved in network transmission. By not using the plaintext, the transformation process is kept confidential, and at the same time, the encryption effect is achieved. It can achieve an effective balance between compression and encryption to the greatest extent possible.

Here, the row transformation refers to exchanging one or more rows in the data with another row or multiple other rows. The column transformation refers to exchanging one or more rows in the data with another column or multiple other columns.

Correspondingly, the above operation of performing encryption on the data to be encrypted, to obtain the encrypted data of the original file include: obtaining a displacement multiple, a key array, and a position transformation array for encryption, wherein the position transformation array is obtained by sorting the key array; performing encryption processing on the data to be encrypted according to the displacement multiple, the key array, and the position transformation array, to obtain the encrypted data of the original file.

In the encryption processing such as row transformation and/or column transformation, the number of rows and/or columns involved in a single transformation is used as the displacement multiple. For example, if the encryption processing method is row transformation with a single row per transformation, the displacement multiple is 1; correspondingly, one row of data is swapped with another. If the encryption processing method is column transformation with two columns per transformation, the displacement multiple is 2; correspondingly, two columns of data are swapped with another two. If the displacement multiple is 2, it can be interpreted as moving two rows each time. Correspondingly, the first row and the second row can serve as a unit or be regarded as the first row in the new array, the third row and the fourth row can serve as a unit or be regarded as the second row in the new array, the fifth row and the sixth row can serve as a unit or be regarded as the third row in the new array, and so on.

By default, the displacement multiple is 1. But when browser-supported canvas has size limitations, the displacement multiple can be calculated, detailed calculation methods is described in the corresponding section below.

Here, the key array refers to the byte array converted from the key ciphertext string; the position transformation array is generated by sorting the key array data in a certain order such as a predefined order, and recording each data element's position in the sorted key array.

The above operation for obtaining the key array and the position transformation array include: obtaining the plaintext of the encryption key, and encrypting the plaintext of the encryption key using a preset encryption algorithm to obtain the ciphertext of the key; converting the ciphertext of the key to a byte array to obtain the key array; sorting the data in the key array from the smallest to the largest, and taking the array corresponding to the position of each data in the key array after sorting as the position transformation array.

Here, the plaintext of the encryption key can be input by the user or obtained through other methods. The plaintext of the encryption key can be any characters, strings, and/or numbers, etc. To improve the encryption effect, it is recommended that the plaintext of the encryption key is no less than 8 digits. Subsequently, the plaintext of the encryption key is encrypted by using a preset encryption algorithm such as the MD5 encryption algorithm, to generate the ciphertext of the key with corresponding number of bytes. The corresponding number of bytes can be 32 digits, 64 digits, or 128 digits, etc. The ciphertext of the key with corresponding number of bytes is converted into a byte array, then an ArrayBuffer with the corresponding number of bytes can be generated, which is the key array. For example, the key array can be 32 bytes, and the data in the key array can include [50, 101, 51, 99, 102, 54, 48, 54, 49, 50, 48, 99, 53, 98, 56, 56, 53, 97, 53, 48, 98, 51, 52, 53, 50, 97, 55, 54, 98, 57, 50, 99].

The data in the key array is sorted according to a preset order such as ascending or descending order, while the relative order of identical values is ensured to remain unchanged before and after sorting. The position of each data in the key array, that is the index in the sorted array, is recorded. Finally, an array with the corresponding number of bytes is generated, which is the position transformation array. The corresponding number of bytes means the number of bytes in the position transformation array is the same as that in the key array. If the key array has 32 bytes, the position transformation array is also 32 bytes, and consist of data from 0 to 31.

After obtaining the displacement multiple, the key array, and the position transformation array, encryption processing is performed on the data to be encrypted. The above-mentioned operations of performing encryption processing on the data to be encrypted according to the displacement multiple, a key array, and a position transformation array, to obtain the encrypted data of the original file include: for the data to be encrypted, mapping the value of each data from the key array to the corresponding row and/or corresponding column of the data to be encrypted according to the displacement multiple; determining the position information of the value of each data in the position transformation array, and determining the target row and/or the target column according the position information and the displacement multiple; exchanging the data in the corresponding row and/or the corresponding column with the data in the target row and/or the target column of the data to be encrypted.

If the encryption processing method is row transformation, the value of each data from the key array is mapped to the corresponding row of the data to be encrypted according to the displacement multiple, the target row is determined according to the position information and the displacement multiple, and the data in the corresponding row is exchanged with the data in the target row of the data to be encrypted. If the encryption processing method is column transformation, the value of each data from the key array is mapped to the corresponding column of the data to be encrypted according to the displacement multiple, the target column is determined according to the position information and the displacement multiple, and the data in the corresponding column is exchanged with the data in the target column of the data to be encrypted.

The row transformation is taken as the encryption processing method, and the displacement multiple is taken as 1 for illustration. Supposing the first data item in the key array is 50, it will be mapped to the 50^{th} row of the data to be encrypted, the data item will drop to the 10^{th} position after sorting, that is, the corresponding position information in the position transformation array is 10. Then the target row is determined to be 10. Correspondingly, the data in the 50^{th} row of the data is exchanged with the data in the 10^{th} row of the data to be encrypted.

For each data item in the key array, the corresponding row transformation will be performed in the corresponding way. If the key array is 32 bytes, 32 times of transformations are required to complete the encryption process of the data to be encrypted.

It should be noted that, if the finally obtained encryption data of the original file is saved as a picture, since each pixel of the picture has 4 channels, blank padding data is also required after the date to be encrypted is obtained. Correspondingly, the file processing method also includes: for the data to be encrypted, determining the number of bytes of blank padding data to be filled and the blank padding data to be filled; filling the data to be encrypted with the blank padding data of the number of bytes of blank padding data at the end to obtain the filled data to be encrypted. Here, the blank padding data to be filled can be 255, which is inserted at the end.

Correspondingly, after the operation of obtaining the encrypted data of the original file, the file processing metho also include 106.

106, Exporting the encrypted data in the form of an image and transmitting the image, or writing the encrypted data into a text file and transmitting the text.

After obtaining the encrypted data, the encrypted data is imported into a canvas to be saved and transmitted in the form of an image. Alternatively, the image is saved to a text for transmission. Alternatively, the encrypted data is converted into a string, which is saved to a text for transmission.

Therefore, transmission speed can be improved and the confidentiality of file transmission can be enhanced.

**In** some embodiments of the present application, the byte array corresponding to the original file is saved onto the canvas according to different methods, and then compressed according to the compression method supported by the canvas. The data with the smallest data volume is determined as the date to be encrypted from the data obtained after compression and the original byte array. This can ensure that the data volume before encryption is minimized and the information entropy is reduced to the greatest extend. Even if the data to be encrypted is further encrypted, the increase in information entropy is limited, the increase in information encryption can be minimized, and a balance between compression and encryption can be achieved to a certain extent. When the encryption data of the original file is transmitted, the transmission speed can be increase and confidentiality can be improved.

In practice, since the method in some embodiments of the present application can be applied in a browser environment. And to prevent memory overflow and freezing, the maximum area of the canvas must be limited. As different browsers have different memory usage standards, the maximum width, height, and area of the canvas supported by different browsers vary. As shown in Table 1, the data in Table 1 are in pixels, for example, the maximum width of the canvas supported by canvas is 32767, that is, 32767 pixels.

Table 1 Examples of the maximum width, height, ad area of canvases supported different browsers

| Browser | maximum width | maximum height | maximum area |
|---|---|---|---|
| Chrome | 32767 | 32767 | 268435456 (16384*16384) |
| Firefox | 32767 | 32767 | 472907776 (22528*20992) |

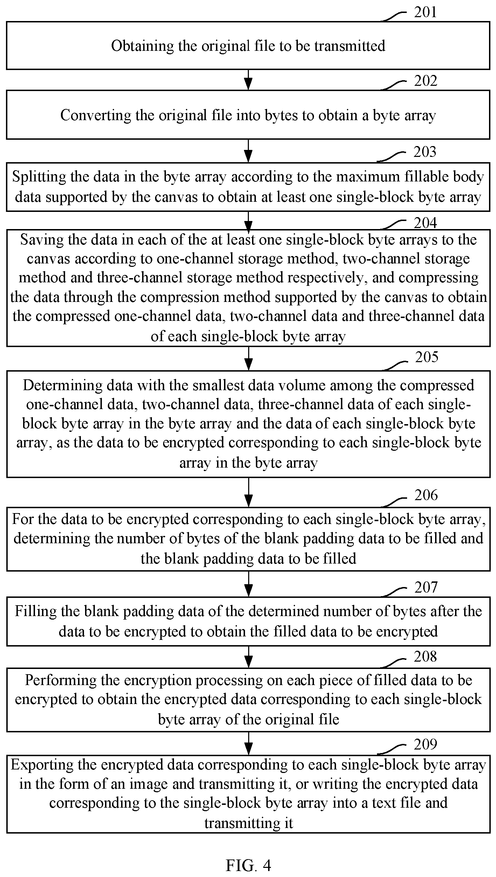

As shown in FIG. 4, it is a schematic flowchart of the file processing method provided in some embodiments of the present application. The file processing method is written from the perspective of the sender, and is applied to computer equipment. It specifically includes the following operations:
201, Obtaining the original file to be transmitted.
202, Converting the original file into bytes to obtain a byte array.
203, Splitting the data in the byte array according to the maximum fillable body data supported by the canvas to obtain at least one single-block byte array.

Here, the maximum fillable body data supported by the canvas is at least related to the displacement multiple. For example, it is related to the displacement multiple and the size of the original file to be transmitted.

First, the maximum processable file size under one-multiple is determined: the size of the original file to be transmitted, the maximum number of bytes supported by the canvas and the determined maximum number of blocks are obtained. The maximum processable file size with the displacement multiple equals to 1, that is, the maximum processable file size under one-multiple, is determined according to the size of the original file, the maximum number of bytes supported by the canvas and the maximum number of blocks.

Under the default condition, the displacement multiple is 1. The maximum number of bytes supported by a single-block canvas is 256*32766*4, Among them, one pixel is used to save the identification code. Therefore, the number of pixels that can save the byte array is 32766, and each pixel has 4 channels, with each channel corresponding to 256. Since the third identifier of the identification code Magic Code corresponds to one byte, the maximum number of blocks is only 256 (if the computer equipment supports a 10-bit pixel depth, the third identifier corresponds to more than one byte, and the maximum can be 1024). Moreover, considering the extreme case where all blocks use the one-channel storage method, the theoretically supported maximum processable file size is (256*32766*4*256)/4=256*256*32766=2G, approximately. This value is recorded as the maximum processable file size under one-multiple.

Then the current displacement multiple is determined according to the maximum processable file size under one-multiple and the size of the original to be transmitted. The displacement multiple is equal to a rounded-up value of the size of the actual original file to be transmitted divided by the maximum processable file size under one-multiple. Correspondingly, the formula for determining the displacement multiple is: Displacement multiple=Math.ceil (size of the original file to be transmitted/ (256*256*32766)).

Finally, the maximum fillable body data supported by the canvas is determined according to the displacement multiple. Here, the maximum fillable body data is: Displacement multiple * 256. Here, 256*32766 is understood as the maximum fillable body data corresponding to the extreme case where the one-channel storage method is applied and the displacement multiple is 1.

After determining the maximum fillable body data supported by the canvas, the data in the byte array is split according the maximum fillable body data supported by the canvas to obtain at least single-block byte array. Specifically, the number of blocks to be split is determined according to the maximum fillable body data supported by the canvas and the size of the byte array. The data in the byte array is split according to the number of blocks to obtain at least one single-block byte array.

The calculation formula for the number of blocks to be split is: Number of blocks==Math.ceil(size of the original file to be transmitted/ (Displacement multiple*256*32766)). Split the data in the byte array according to the number of blocks. When splitting, It is split in units of the maximum fillable body date supported by the canvas to obtain one or more single-block byte array. The block index is written into the identification code of each single-block byte array, such as the third identifier of the identification code. **In** addition, the second identifier of the identification code of each single-block byte array needs to be filled with the encoding of the file type to be transmitted.

204, Saving the data in each of the at least one single-block byte arrays to the canvas according to one-channel storage method, two-channel storage method and three-channel storage method respectively, and compressing the data through the compression method supported by the canvas to obtain the compressed one-channel data, two-channel data and three-channel data of each single-block byte array.

For each of the at least one single-block byte arrays, the target storage channel for saving each single-block array is determined according to the one-channel storage method, two-channel storage method and three-channel storage method. Here, the target storage channel corresponding to the one-channel storage method include any one of the R, G and B channels. The target storage channels corresponding to the two-channel storage method are any two of the R, G and B channels. The target storage channels corresponding to the three-channel storage method are the R, G and B channels. The target storage channels are written into the identification code of each single-block byte array, and the identification code is filled into the first pixel of the canvas. The data in each single-block byte array is saved to the target storage channels corresponding to other pixels of the canvas in order. The data of each single-block byte of array saved to the target storage channel in the canvas is called body data.

Here, for each single-block byte array, the first identifier of the identification code of each single-block byte array is determined according to the one-channel storage method, the two-channel storage method and the three-channel storage method, thus, the complete identification code is determined. For the one-channel storage method, the two-channel storage method and the three-channel storage method, the corresponding identification code is inserted into the forefront of the Image Data as the first pixel, and the date in each single-block byte array is saved to the target storage channel corresponding to other pixels sequentially according to the one-channel storage method, the two-channel storage method and the three-channel storage method.

For each single-block byte array, take the one-channel storage method as an example for illustration. Assuming that the corresponding target storage channel is R channel, then, the target storage channel and/or the number of the target storage channel is saved to the first identifier of the identification code. By adding the block index filled during the previous block splitting, the obtained file type code and the default 255 together, the complete identification code corresponding to the single-block byte array can be obtained. The corresponding identification code is inserted into the forefront of the Image Data as the first pixel. Starting from the second pixel, the data in the single-block byte array is saved to the R channel of the canvas in order. Then, the data in the single-block byte array is saved to the R and G channels of the canvas in order according to the two-channels storage method, and the data in the single-block byte array is saved to the R, G and B channels of the canvas in order according to the three-channels storage method.

Here, the corresponding maximum width of the canvas is 32766 when the one-channel storage method is applied, the corresponding maximum width of the canvas is 32766/2 when the second-channel storage method is applied, and the corresponding maximum width of the canvas is 32766/3 when the three-channel storage method is applied.

After saving the data in the single-block byte array to the canvas according to the one-channel storage method, two-channel method, and three channel method respectively, the data is compressed using the compression method supported by the canvas to respectively obtain the compressed one-channel data, two-channel data and three-channel data.

Each of the single-block byte arrays is processed in the same way to respectively obtain the compressed one-channel data, two-channel data and three-channel data corresponding to each single-block byte arrays.

205, determining data with the smallest data volume among the compressed one-channel data, two-channel data, three-channel data of each single-block byte array in the byte array and the data of each single-block byte array, as the data to be encrypted corresponding to each single-block byte array in the byte array.

For each single-block byte array, the data with the smallest data volume among the compressed one-channel data, two-channel data, three-channel data and the single-block byte array is determined as the data to be encrypted corresponding to this single-block byte array. Thus, the data to be encrypted corresponding to each single-block byte array is obtained. It should be noted that if the data volume of the single-block byte array is the smallest, the identification code Magic Code needs to be added to the byte array to obtain the data to be encrypted. Here, the value of the first identifier of the identification code Magic Code is 0.

It should be understood, the data to be encrypted corresponding to each single-block byte array can be compressed to one-channel data, two-channel data or three-channel data, or it can include the identification code and the single-block byte array. The data to be encrypted corresponding to each single-block byte array may not be completely the same. For example, the date to be encrypted corresponding to the first byte array is the one-channel data, the data to be encrypted corresponding to the second byte array is the identification and this single-block byte array, and the data to be encrypted corresponding to the third byte array is the three-channel data, etc.

**In** one embodiment, for the data to be encrypted of each block, since the data exported from the canvas need to be a multiple of 4, and a corresponding fixed number of rows in each block of the canvas to be encrypted needs to be ensured for subsequent encryption processing, blank padding data may be required. Correspondingly, the file processing method further includes the following operations 206-207.

206, For the data to be encrypted corresponding to each single-block byte array, determining the number of bytes of the blank padding data to be filled and the blank padding data to be filled.

For the data to be encrypted corresponding to each single-block byte array, the fixed number of rows of the canvas is determined according to the displacement multiple. The minimum width of the canvas is determined according to the data to be encrypted and the fixed number of rows. The number of bytes of blank padding data to be filled for each single-block byte array is determined according to the minimum width of the canvas, the displacement, and the data to be encrypted.

For example, the result of 256*displacement multiple can be used as the fixed number of rows of the canvas to be encrypted. The data to be encrypted is divided by the fixed number of rows and then the result is rounded up to obtain the minimum width of the canvas to be encrypted, which is specifically the number of pixels corresponding to the minimum width of the canvas to be encrypted. The number of bytes of blank padding data to be filled is determined according to the minimum width of the canvas to be encrypted, displacement multiple, and the data to be encrypted. For example, it can be calculated according to the formula: the number of bytes of blank padding data = he minimum width of the canvas to be encrypted*256* displacement multiple*4-the data to be encrypted.

207, Filling the blank padding data of the determined number of bytes after the data to be encrypted to obtain the filled data to be encrypted.

Here, the blank padding data can be 255. The bland padding data is inserted/filled after the data to be encrypted, and the number of bytes to be inserted/filled is the determined number of bytes of the blank padding data.

208, Performing the encryption processing on each piece of filled data to be encrypted to obtain the encrypted data corresponding to each single-block byte array of the original file.

Correspondingly, the key array used for encryption, the position transformation array and the displacement multiple calculated according to the formula of the displacement multiple are obtained. Encryption processing is performed on the data to be encrypted corresponding to each single-block byte array according to the key array, the position transformation array and the displacement multiple to obtain the encrypted data of each single-block byte array. The encrypted data of each single-block byte array is combined as the encrypted data of the original file.

Here, the operation of perform encryption processing on the data to be encrypted corresponding to each single-block byte array according to the key array, the position transformation array and the displacement multiple to obtain the encrypted data of each single-block byte array includes: for the date to be encrypted corresponding to each single-block byte array in the byte array, mapping each data value in the key array to the corresponding row or column of the data to be encrypted according to the displacement multiple; determining the position information of each data value in the position transformation array, and determining the target row or target column according to the position information and displacement multiple; exchanging the data in the corresponding row or column of the data to be encrypted with the data in the target row or target column to obtain the encrypted data of each single-block byte array.

For example, the encryption processing method is illustrated using encryption for row transformation with a displacement multiple of 2. Supposing the first data of the key array is 50, it will be mapped to the 99^{th} and 100^{th} rows of the data to be encrypted of a single-block byte array according to the displacement multiple. If the position information in the position transformation array is determined to be 10, then the target rows are determined to be 19^{th} and 20^{th} row according the position information and the displacement multiple. Correspondingly, the data in the 99^{th} and 100^{th} rows of the data to be encrypted is exchanged with the data in the 19^{th} and 20^{th} rows of the data to be encrypted. This process is repeated until each data in the key array has been processed by exchanging the corresponding row and the target row to complete the encryption process of a single-block byte array. For the specific encryption process, it can be understood by referring to the description of the corresponding operations above. It will not be repeated here.

209, Exporting the encrypted data corresponding to each single-block byte array in the form of an image and transmitting it, or writing the encrypted data corresponding to the single-block byte array into a text file and transmitting it.

In this embodiment, the data in the byte array is split according to maximum fillable body data supported by the canvas. Then, corresponding processing is performed on each single-block byte array in at least one single-block data obtained after the splitting, so as to avoid memory overflow and freezing during the processing. Moreover, after splitting, multiple single-block data can be processed in parallel, which improve the processing efficiency and transmission efficiency, and enhances the user experience. At the same time, it can ensure that the data volume before encryption is minimized and the information entropy is reduced to the greatest extend. Even if the data to be encrypted is further encrypted, the increase in information entropy is limited, the increase in information encryption can be minimized, and a balance between compression and encryption can be achieved to a certain extent. When the encryption data of the original file is transmitted, the transmission speed can be increase and confidentiality can be improved.

The above-mentioned embodiments involve the process of compression and encryption. The process of decryption and decompression will be described below. During the process of decryption and decompression, mirror-inverse operations, first decrypt, then decompress in sequence are performed, and finally the original file is obtained.

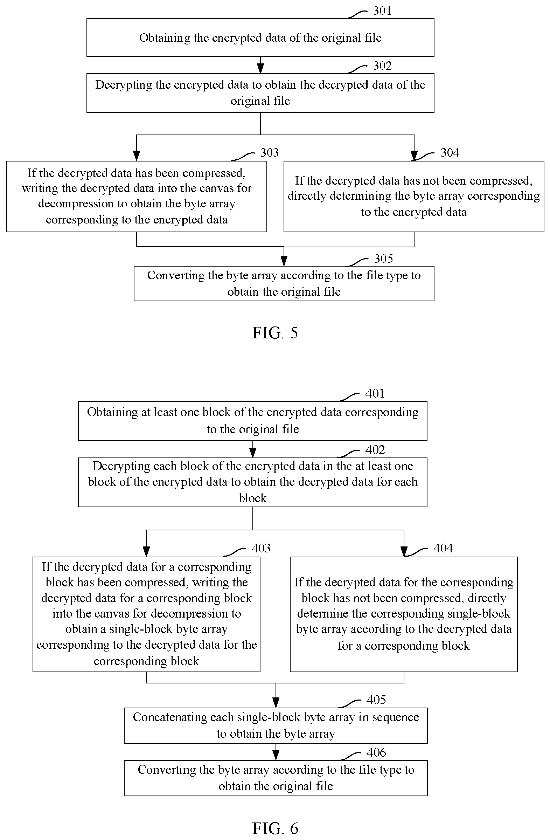

FIG. 5 is another schematic flowchart of the file processing method provided in some embodiments of the present application; the file processing method is written from the perspective of the receiver and can be understood in combination with the embodiment shown in FIG. 2. This file processing method is applied to computer equipment and specifically includes the following operations:
301, Obtaining the encrypted data of the original file.

The encrypted data is obtained according to the method of the above-mentioned embodiments. For details, please refer to the description in the above embodiments, and it will not be repeated here. This encrypted data can be sent from the sender to the receiver. The canvas may have no size limit or may have a size limit. When the canvas has no size limit, the original file is not divided into blocks, and the corresponding encrypted data is in one block. When the canvas has size limit, the original file may have been divided into blocks, the corresponding encrypted data can be at least one block.

302, Decrypting the encrypted data to obtain the decrypted data of the original file.

Correspondingly, the displacement multiple, the reversed key array and the reversed position transformation array are obtained. Here, the reversed position transformation array is determined according to the reversed key array. The encrypted data is decrypted according to the displacement, the reversed key array, and the reversed position transformation array to obtain the decrypted data.

Here, the displacement multiple can be determined according to the number of rows of the encrypted data. Specifically, the number of rows of the encrypted data is obtained, and the displacement multiple is determined according to formula: fixed number of rows=256*displacement multiple. The determined displacement multiple is the same as the one determined during the compression and encryption process.

The operations of obtaining the reversed key array and the reversed position transformation array include: obtaining the plaintext of the encryption key, and encrypting the plaintext of the encryption key using a preset encryption algorithm to obtain the ciphertext of the key; converting the ciphertext of the key into a byte array to obtain a key array; sorting the data in the key array in a preset order, and using the array that stores the position of each data in the key array after sorting as the position transformation array; reversing the data in the key array and the position transformation array to obtain the reversed key array and the reversed position transformation array respectively.

The operations of obtaining the key array and position transformation array are the same as those described above, and will not be repeated here. After obtaining the key array and the position transformation array, reverse processing may be performed on the data in the key array to obtain the reversed key array, and reverse processing may be performed on the data in the position transformation array to obtain the reversed position transformation array. Here, the reverse processing means exchanging the first data in the array with the last data, exchanging the second data in the array with second-last one, exchanging the third data in the array with third-last one, and so on, until all the data in the array have been exchanged. For example, if the data in the key array are 42, 51, 100, 94, ..., 58, 21, 73, 89 respectively, then the reversed key array is 89, 73, 21, 58, ..., 94, 100, 51, 42.

After obtaining the reversed key array and the reversed position transformation array, the encrypted data is decrypted according to the displacement multiple, the reversed kay array and the reversed position transformation array to obtain the decrypted data. Specifically, for each value of the data in the reversed key array, it is mapped to the corresponding row and/or corresponding column of the encrypted data according to the displacement multiple. The position information of each value of the data in the reversed transformation array is determined, and the target row and/or target column is determined according to the position information and the displacement multiple. The data in the corresponding row and/or the corresponding column of the encrypted data is exchanged with the data in the target row and/or target column of the encrypted data. The value of each data in the reversed key data is exchanged in the same way, and finally the decrypted data is obtained. Specifically, the exchange method is the same as that in the above-mentioned compression and encryption process. For details, please refer to the relevant part describe above.

Here, the decrypted data corresponds to the padding data to be encrypted in the compression and encryption process.

303, If the decrypted data has been compressed, writing the decrypted data into the canvas for decompression to obtain the byte array corresponding to the encrypted data.

After the decrypted data is obtained, it can be determined whether the decrypted data has been compressed during the compression and encryption process according to the identification code included in the decrypted data. When the first identifier of the identification code is equal to 0, it means that the decrypted data has not been compressed during the compression and encryption process. Otherwise, for example, when the first identifier of the identification code is equal to a non-zero value such as 1, 2, 3 or R, RG, RGB, it means that the decrypted data has been compressed during the compression and encryption process.

If the decrypted data has been compressed during the compression and encryption process, the decrypted data corresponds to compressed data and blank padding data in the compression and encryption process. The compressed data includes the identification code and the body data (a single-block byte array). Then, the decompression process is required. For example, the decrypted data is written into the canvas for decompression to obtain the byte array corresponding to the decrypted data. Specifically, the decrypted data is written into the canvas for decompression to obtain the initial restored data corresponding to the decrypted data. The identification code and/or blank padding data is removed from the initial restored data. A target storage channel is obtained corresponding to the initial restored data, and the data from the target storage channel in the canvas is extracted to obtain the byte array corresponding to the decrypted data.

Here, the decrypted data is written into the canvas and the canvas.getImageData interface is applied for decompression to obtain the corresponding data and the initial restored data is got. The initial restored data are the identification code before compression, body data (a single-block byte array) and the blank padding data in the canvas. The identification code and blank padding data is removed from the initial restored data. When the blank padding data is removed, all the 255s at the end of the initial restored data is deleted. The target storage channel is obtained corresponding to the initial restored data. Specifically, the identification code, which is the value of the first pixel in the canvas, is obtained corresponding to the initial restored data. The first identifier of the identification code is obtained, and the one or more target storage channels is determined through the first identifier. When the first identifier is equals to 1, it means that the target storage channel includes R channel. When the first identifier is equals to 2, it means that the target storage channels include R and B channels. When the first identifier is equals to 3, it means that the target storage channels include R, G and B channels. The corresponding number of bytes of data in the target storage channel is extracted from the canvas to obtain the byte array corresponding to the decrypted data.

304, If the decrypted data has not been compressed, directly determining the byte array corresponding to the encrypted data.

If the decrypted data has not been compressed during the compression and encryption process, the decrypted data include the identification code, the byte array and the blank padding data. The identification code and the blank padding data is removed to obtain the byte array. That is, if the decrypted data has not been compressed during the compression and encryption process, no decompression is required.

305, Converting the byte array according to the file type to obtain the original file.

The file type code is obtained according to the second identifier of the identification code, and the corresponding file type is looked up in a file type mapping table according to the file type code. The byte array is converted using the file interface according to the file type to obtain the original file.

FIG. 6 is another schematic flowchart of the file processing method provided in some embodiments of the present application. The file processing method is written from the perspective of the receiver and can be understood in combination with the embodiment shown in FIG. 4. This file processing method is applied to computer equipment and specifically includes the following operations:
401, Obtaining at least one block of the encrypted data corresponding to the original file.

The number of divided blocks corresponding to the encrypted data is determined according to the method described above.

402, Decrypting each block of the encrypted data in the at least one block of the encrypted data to obtain the decrypted data for each block.

Correspondingly, the displacement multiple, the reversed key array and the reversed position transformation array are obtained. Each block of the encrypted data in the at least one block of the encrypted data is decrypted to obtain the decrypted data for each block.

For each block of the encrypted data, The following operations are performed: for each value of the data in the reversed kay array, it is mapped to the corresponding row and/or column of the encrypted data according to the displacement multiple; the position information of each value of the data in the reversed position transformation array is determined, and the target row and/or target column is determined according to the position information and the displacement multipl; the data in the corresponding row and/or the corresponding column of the encrypted data is exchanged with the data in the target row and/or target column of the encrypted data; the value of each data in the reversed key array is exchanged in the same way, and finally the decrypted data of this block of the encrypted data is obtained. In this way, decrypted data of each block corresponding to each block of the encrypted data can be obtained. Decrypted data of each block corresponds to the padded data to be encrypted during the compression and encryption process.

403, If the decrypted data for a corresponding block has been compressed, writing the decrypted data for a corresponding block into the canvas for decompression to obtain a single-block byte array corresponding to the decrypted data for the corresponding block.

Here, the decrypted data of each block includes the identification code, which is used to determine whether the decrypted data of each block has been compressed during the compression and encryption process.

If the decrypted data for a corresponding block has been compressed during the compression and encryption process, the decrypted data for a corresponding block includes the compressed data and the blank padding data. The compressed data includes the identification code and the body data (a single-block byte array).

The decrypted data for a corresponding block is written into the canvas for compression to obtain the initial restored data corresponding to the decrypted data for a corresponding block. The initial data is the identification code, the body data (a single - block byte array) and the blank padding data in the canvas before compression. The identification code and/or blank padding data are removed from the initial restored data, and all the 255s at the end of the initial restored data are deleted when the blank padding data is removed. The target storage channel corresponding to the initial restored data is obtained. For example, the first identifier of the identification code of the initial restored data is obtained, and the first identifier indicates the applied target storage channel. The data is extracted from the target storage channel in the canvas to obtain the single - block byte array corresponding to the decrypted data for the corresponding block.

404, If the decrypted data for the corresponding block has not been compressed, directly determine the corresponding single-block byte array according to the decrypted data for a corresponding block.

If the decrypted data for the corresponding block has not been compressed, the decrypted data for the corresponding block includes the identification code, the body data (a single-block byte array) and the blank padding data. The identification code and the blank padding are removed form the decrypted data for a corresponding block to obtain the corresponding single-block byte array.

405, Concatenating each single-block byte array in sequence to obtain the byte array.

Since the decrypted data of each block includes the identification code, the third identifier of the identification code is the block index corresponding to the decrypted data of each block. The block index is obtained corresponding to each single-block byte array, and the data in each single-block byte array is concatenated according to the block index in sequence to obtain the byte array before it was split.

406, Converting the byte array according to the file type to obtain the original file.

This part describes the decryption and decompression process.

According to the method described in the above embodiments, this embodiment further describes it from the perspective of the file processing apparatus. The file processing apparatus can be implemented as an independent entity or integrated into a computer device.

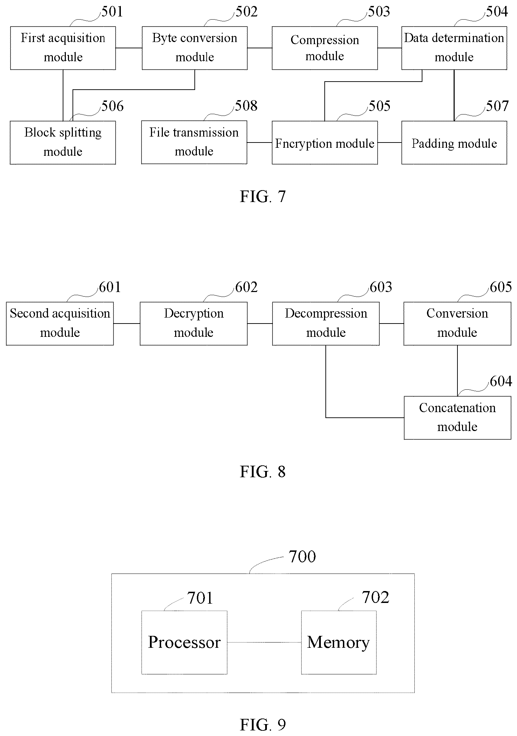

Please refer to FIG. 7. FIG. 7 specifically describes a file processing apparatus provided in some embodiments of the present application, which is applied to computer devices, such as a sender. There exits an environment in the computer devices that can support the canvas. For example, the canvas can be a Canvas, the environment that supports canvases can be a browser environment. The file processing apparatus can include: a first acquisition module 501, a byte conversion module 502, a compression module 503, a data determination module 504, and an encryption module 505.

The first acquisition module 501 is configured to obtain the original file to be transmitted.

The byte conversion module 502 is configured to convert the original file into bytes to obtain a byte array.

The compression module 503 is configured to save the data from the byte array onto the canvas through one-channel storage method, two-channel storage method and three-channel storage method respectively, and to compress the data using compression method supported by the canvas to obtain compressed one-channel data, two-channel data and three-channel data. The canvas is configured to display multiple pixels.

The data determination module 504 is configured to determine the data with the smallest data volume among the one-channel data, the two-channel data, the three-channel data and the byte array as the data to be encrypted corresponding to the byte array.

The encryption module 505 is configured to perform encryption processing on the data to be encrypted, to obtain the encrypted data of the original file.

In one embodiment of the present application, the file processing apparatus further includes a block splitting module 506. The block splitting module 506 is configured to split the data in the byte array according to the maximum fillable body data supported by the canvas to obtain at least one single-block byte array. Correspondingly, the compression module 503 is further configured to save the data in each of the at least one single-block byte arrays to the canvas according to one-channel storage method, two-channel storage method and three-channel storage method respectively, and to compress them through the compression method supported by the canvas to obtain the compressed one-channel data, two-channel data and three-channel data of each single-block byte array. The data determination module 504 is further configured to determine the data with the smallest data volume among the compressed one-channel data, two-channel data, three-channel data of each single-block byte array in the byte array, and the data of each single-block byte array, as the data to be encrypted corresponding to each single-block byte array. The encryption module 505 is further configured to perform the encryption processing on the data to be encrypted corresponding to each single-block byte array in the byte array to obtain the encryption data corresponding to each single-block byte array of the original file.

In one embodiment of the present application, for each of the at least one single-block byte arrays, the compression module 503 is specifically configured to determine a target storage channel for saving each the single-block array according to the one-channel storage method, the two-channel storage method and the three-channel storage method, wherein the target storage channel corresponding to the one-channel storage method comprise any one of the R, G and B channels, the target storage channels corresponding to the two-channel storage method comprise any two of the R, G and B channels, the target storage channels corresponding to the three-channel storage method comprise the R, G and B channels; and to write the target storage channels into the identification code of each single-block byte array; and to fill the identification code into the first pixel of the canvas; and to save the data in each the single-block byte array to the target storage channels corresponding to other pixels of the canvas in order.

In one embodiment of the present application, the block splitting module 506 is specifically configured to determine a number of blocks to be split according to maximum fillable body data supported by the canvas and the size of the byte array, the maximum fillable body data supported by the canvas is at least related to a displacement multiple; and to split the data in the byte array according to the number of blocks to obtain the at least one single-block byte array.

**In** one embodiment of the present application, the encryption module 505 is specifically configured to obtain a key array, a position transformation array and the displacement multiple, all of which are used for encryption, the position transformation array is obtained by sorting the key array; and to perform encryption processing on the data to be encrypted corresponding to each the single-block byte array in the byte array according to the displacement multiple, the key array, and the position transformation array, to obtain the encrypted data of the original file.

**In** one embodiment of the present application, when the encryption module 505 execute the operation of performing encryption processing on the data to be encrypted corresponding to each the single-block byte array in the byte array according to the displacement multiple, the key array, and the position transformation array, to obtain the encrypted data of the original file, for the date to be encrypted corresponding to each the single-block byte array in the byte array, it is specifically configured to map each data value in the key array to the corresponding row or column of the data to be encrypted according to the displacement multiple; and to determine position information of each the data value in the position transformation array, and to determine a target row or a target column according to the position information and the displacement multiple; and to exchange data in the corresponding row or column of the data to be encrypted with data in the target row or target column.

**In** one embodiment of the present application, when the encryption module 505 execute the operation of obtaining the displacement multiple, it is specifically configured to obtain size of the original file, a maximum number of bytes supported by the canvas and a determined maximum number of blocks; and to determine maximum processable file size when the displacement multiple is 1 according to the size, the maximum number of bytes and the maximum number of blocks; and to determine the displacement multiple according to the size of the original to be transmitted and the maximum processable file size.

**In** one embodiment of the present application, when the encryption module 505 execute the operation of obtaining a key array, a position transformation array, it is specifically configured to obtain plaintext of the encryption key, and encrypt the plaintext of the encryption key using a preset encryption algorithm to obtain ciphertext of the key; and to convert the ciphertext of the key to a byte array to obtain the key array; and to sort the data in the key array in a preset order, and to take the array used to saving a position of each the data in the key array after sorting as the position transformation array.

In one embodiment of the present application, the file processing apparatus further includes a padding module 507. after obtaining the data to be encrypted corresponding to each the single-block byte array in the byte array, for the data to be encrypted, the padding module 507 is configure to determine a number of bytes of blank padding data to be filled and the blank padding data to be filled; and to fill the data to be encrypted with the blank padding data of the number of bytes of blank padding data at the end to obtain filled data to be encrypted.

In one embodiment of the present application, when the padding module 507 execute the operation of for the data to be encrypted, determine a number of bytes of blank padding data to be filled, it is specifically configured to determine a fixed number of rows of the canvas according to the displacement multiple; and to determine a minimum width of the canvas according to the data to be encrypted and the fixed number of rows; and to determine the number of bytes of blank padding data to be filled according to the minimum width of the canvas, the displacement, and the data to be encrypted.

In one embodiment of the present application, the file processing apparatus further includes a file transmission module 508. The file transmission module 508 is configured to export the encrypted data in the form of an image and transmitting the image, or write the encrypted data into a text file and transmitting the text file.

Please refer to FIG. 8. FIG. 8 specifically describes a file processing apparatus provided in some embodiments of the present application, which is applied to computer devices, such as a receiver. There exits an environment in the computer devices that can support the canvas. For example, the canvas can be a Canvas, the environment that supports canvases can be a browser environment. The file processing apparatus can include: a second acquisition module 601, a decryption module 602, a decompression module 603, a conversion module 604.

The second acquisition module 601 is configured to obtain encryption data of an original file, the encryption data is obtained according to the corresponding embodiments above.

The decryption module 602 is configured to decrypt the encrypted data to obtain decrypted data of the original file.
when the decrypted data has been compressed, the decompression module 603 is configured to write the decrypted data into a canvas for decompression to obtain a byte array corresponding to the encrypted data.

The conversion module 604 is configured to convert the byte array according to a file type to obtain the original file.

In one embodiment of the present application, the file processing apparatus further includes a concatenation module 605. Correspondingly, the second acquisition module 601 is configured to obtain at least one block of the encrypted data corresponding to the original file. The decryption module 602 is configured to decrypt each the block of the encrypted data in the at least one block of the encrypted data to obtain decrypted data for each the block. When the decrypted data for a corresponding block has been compressed, the decompression module 603 is configured to write the decrypted data for a corresponding block into the canvas for decompression to obtain a single-block byte array corresponding to the decrypted data for the corresponding block. When the decrypted data for the corresponding block has not been compressed, the decompression module 603 is configured to directly determine the corresponding single-block byte array according to the decrypted data for the corresponding block. The concatenation module 605 is configured to concatenate each the single-block byte array in sequence to obtain the byte array. The conversion module 604 is configured to convert the byte array according to the file type to obtain the original file.

In one embodiment of the present application, when the decompression module 603 execute the operation of writing the decrypted data into a canvas for decompression to obtain a byte array corresponding to the encrypted data, it is specifically configured to write the decrypted data for a corresponding block into the canvas for compression to obtain initial restored data corresponding to the decrypted data for a corresponding block; and to remove an identification code and/or blank padding data from the initial restored data; and to obtain a target storage channel corresponding to the initial restored data from the identification code, and to extract data from the target storage channel in the canvas to obtain the single-block byte array corresponding to the decrypted data for a corresponding block.

In one embodiment of the present application, when the decryption module 602 execute the operation of decrypting each the block of the encrypted data in the at least one block of the encrypted data to obtain decrypted data for each the block, it is specifically configured to obtain a displacement multiple, a reversed key array and a reversed position transformation array, wherein the reversed position transformation array is determined according to the reversed key array; and to decrypt each the block of the encrypted data in the at least one block of the encrypted data according to the displacement, the reversed key array, and the reversed position transformation array to obtain the decrypted data for each the block.

In one embodiment of the present application, when the decryption module 602 execute the operation of obtaining a reversed key array and a reversed position transformation array, it is specifically configured to obtain plaintext of an encryption key, and encrypting the plaintext of the encryption key using a preset encryption algorithm to obtain ciphertext of the key; and to convert the ciphertext of the key into a byte array to obtain a key array; and to sort data in the key array in a preset order, and to use array that stores a position of each data in the key array after sorting as a position transformation array; and to reverse the data in the key array and the position transformation array to obtain the reversed key array and the reversed position transformation array respectively.

The modules in the two embodiments of FIG. 7 and FIG. 8 can also be integrated in one computer device. In specific implementation, each of the above modules can be implemented as independent entities or combined arbitrarily and implemented as one or more entities. For the specific implementation of each of the above modules, refer to the previous method embodiments. For the specific beneficial effect, refer to the beneficial effect in the previous method embodiments. They will not be repeated here.

In addition, the embodiments of the present application further provide a computer device. As shown in FIG.9, the computer device 700 includes a processer 701, a memory 702. There exits an environment in the computer devices that can support the canvas. For example, the canvas can be a Canvas, the environment supporting the canvases can be a browser environment. The processor 701 is electrically connected to the memory 702.

The processor 701 is the control center of the computer device, connects all parts of the entire computer device by using various interfaces and lines, executes various functions of the computer device and processes data by running or loading the application program stored in the memory 702 and invoking the data stored in the memory 702, thereby performing overall monitoring of the computer device.

In this embodiment, the processor 701 in the computer device 700 load the instructions corresponding to the processes of one or more application programs into the memory 702 according to the following operations, and runs the application programs/computer programs stored in the memory 702, so as to implement the various functions applied to the computer device, including the various functions implemented in the sender and various functions implemented in the receiver.

The computer device can implement the operations in any of the embodiments of the file processing method provided by the embodiments of this application. Therefore, it can achieve the beneficial effects that any of the file processing method provided by the embodiments of the present application can achieve. For details, please refer to the previous embodiments which will not be repeated here.

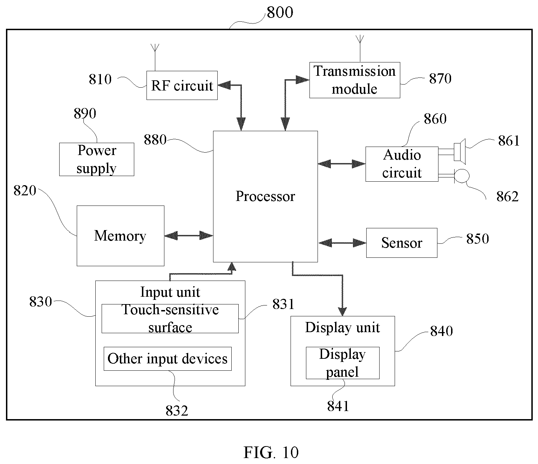

FIG. 10 shows a specific structural block diagram of a computer device provided by some embodiments of the present application. This computer device can be used to implement the file processing method provided in the above embodiments. The computer device include the following modules/units.

RF circuit 810 is used to receive and send electromagnetic waves, realize the mutual conversion between electromagnetic waves and electrical signals, and thus communicate with communication networks or other devices. RF circuit 810 may include various existing circuit components for performing these functions, such as antennas, radio frequency transceivers, digital signal processors, encryption/decryption chips, subscriber identity module (SIM) card, memory, etc. RF circuit 810 can communicate with various networks such as the internet, enterprise intranets, wireless networks, or communicate with other devices through wireless networks. The above wireless networks can include cellular telephone, wireless local area networks, or metropolitan area networks. These wireless network can use various communication standards, protocols and technologies, including but not limited to Global System for Mobile Communication (GSM), Enhanced Data GSM Environment (EDGE), Wideband Code Division Multiple Access (WCDMA), Code Division Access (CDMA), Time Division Multiple Access (TDMA), Wireless Fidelity (Wi-Fi) (such as IEEE 802.11a, IEEE 802.11b, IEEE 802.11g, and/or IEEE 802.11n), Voice over Internet Protocol (VoIP), Worldwide Interoperability for Microwave Access (Wi-Max), other protocols for email, instant messaging, and short messages, as well as any other suitable communication protocols, even those not yet developed.

Memory 820 can be used to store software programs (computer program) and modules. Processor 880 executes various functional applications and data processing by running the software programs and modules stored in the memory 820. The memory 820 include high-speed random access memory and may also include non-volatile memory, such as one or more magnetic storage devices, flash memory, or other non-volatile solid-state memory. In some embodiments, the memory may further include remotely located memory relative to processor 880, which can be connected to computer device 800 through a network. Examples of such networks include but are not limited to the Internet, enterprise intranets, local area networks, mobile communication networks, and combinations thereof.

Input unit 830 can be used to receive input numeric or character information and generate keyboard, mouse, joystick, optical, or trackball signal inputs related to user settings and function controls. Specifically, input unit 830 may include a touch-sensitive surface 831 and other input devices 832. The touch-sensitive surface 831, also known as a touch display screen (touch screen) or touchpad, can collect touch operations performed by the users on or near it (such as operations performed by the user using fingers, styluses or any suitable objects/accessories on or near the touch-sensitive surface 831), and drive the corresponding connection devices according to pre-set programs. Optionally, touch-sensitive surface 831 may include two parts: a touch detection device and a touch controller. The touch detection device detects the user's touch position and the signals generated by touch operations, and transmits the signals to the touch controller. The touch control receives touch information from the touch detection device, converts it into contact coordinates, sends them to processer 880, and can receive commands from the processor 880 and execute them. Additionally, touch-sensitive surface 831 can be implemented using various types such as resistive, capacitive, infrared, and surface acoustic wave technologies. In addition to touch-sensitive surface 831, input unit 830 may further include other input devices 832. Specifically, other input devices 832 may include but are not limited to physical keyboards, function keys (such as volume control keys, power buttons, etc.), trackballs, mice, joysticks, and the like.

Display unit 840 can be used to display information input by the user, information provided to the user, and various graphical user interfaces of computer device 800. These graphical user interfaces can be composed of graphics, text, icons, videos, and any combination thereof. Display unit 840 may include a display panel 841. Optionally, display panel 841 can be configured using LCD (Liquid Crystal Display), OLED (Organic Light-Emitting Diode), or other forms. When touch-sensitive surface 831 detects touch operations on or near it, it transmits the signals to processor 880 to determine the type of touch event. Processor 880 then provides corresponding visual outputs on display panel 841 based on the touch event type. Although in the figure, touch-sensitive surface 831 and display panel 841 are implemented as two independent components for input and output functions, it is understood that they can be integrated to achieve combined input and output functionality.

Computer device 800 may also include at least one sensor 850, such as light sensors, orientation sensors, proximity sensors, and other sensors. As a type of motion sensor, the gravity acceleration sensor can detect acceleration magnitudes in various directions (typically three axes). At rest, it can detect the magnitude and direction of gravity, which is used in the applications for device orientation detection and vibration-related functions (e.g., pedometers, tap recognition). Other sensors that may be configured in computer device 800, such as gyroscopes, barometers, hygrometers, thermometers, and infrared sensors, are not described in detail here.

Audio circuit 860, speaker 861, and microphone 862 provide an audio interface between the user and computer device 800. Audio circuit 860 can converts received audio data into electrical signals and transmits them to speaker 861, which converts the signals into sound outputs. Conversely, microphone 862 converts collected sound signals into electrical signals. Audio circuit 860 receives these signals, converts them into audio data, outputs the data to processor 880 for processing, and then sends the processed audio data via RF circuit 810 to another device or stores it in memory 820 for further processing. Audio circuit 860 may also include an earphone jack to enable communication with external headphones.

Computer device 800 uses transmission module 870 (e.g., Wi-Fi module) to assist users in receiving requests, sending information, etc. It provides wireless broadband internet access to the user. Although transmission module 870 is shown in the figure, it is understood that it is not a necessary component of the computer device 800 and can be omitted without altering the essence of the invention as needed.

Processor 880 serves as the control center of the computer device 800. It connects all components of the entire phone through virous interfaces and lines. It performs various functions and processing data by executing software programs (computer programs) and/or modules stored in the memory 820, and by invoking data stored in the memory 820, thus monitoring the computer device overall. Optionally, processor 880 may include one or more processing cores. In some embodiments, processor 880 can integrates an application processor and a modem processor. The application processor primarily handles operating systems, user interfaces and application etc., while the modem processor handles wireless communications. It is understood that the modem process may not be integrated into the processor 880.

Computer device 800 also includes a power supply 890 (e.g., battery) that powers all components. In some embodiments, power supply 890 is logically connected to processor 880 via a power management system, enabling functions such as charging, discharging, and power consumption management. Power supply 890 may include one or more DC/AC power sources, recharge systems, power fault detection circuits, power converters/inverters, power status indicators, and other components.

Although not shown, computer device 800 may further include components such as cameras (front/back), Bluetooth modules, etc., which are not described here. Specifically, in this embodiment, the display unit of the computer device is a touchscreen display. The computer device also includes memory and one or more programs (computer programs). These programs are stored in memory and configured to be executed by one or more processors. The programs contain operations for implementing the file processing method provided in any of the method embodiments, thereby achieving the beneficial effects of the file processing method. For details, refer to the previous embodiments and no further elaboration is provided here.

During specific implementation, each of the above modules can be implemented as an independent entity, or they can be combined in any way and implemented as the same or several entities. For the specific implementation of each of the above modules, please refer to the previous method embodiments, and no further details will be provided here.

Person having ordinary skill in the art can understand that all or part of the operations in the various methods of the above embodiments can be completed by instructions (computer programs) or by controlling relevant hardware through instructions. These instructions can be stored in a computer-readable storage medium, and loaded and executed by a processor. Therefore, an embodiment of the present invention provides a storage medium in which multiple instructions are stored. These instructions can be loaded by a processor to execute the operations in any of the embodiments of the file processing method provided by the embodiments of the present application.

The storage medium may include: Read Only Memory (ROM), Random Access Memory (RAM), magnetic disks, optical disks, etc. Since the instructions stored in the storage medium can execute the operations in any of the embodiments of the file processing method provided by the embodiments of the present application, the beneficial effects that can be achieved in any of the embodiments of the file processing method provided by the embodiments of the present invention can be realized. For details, please refer to the previous embodiments, and no further details will be provided here.

The above is a detailed introduction to the file processing method, apparatus, storage medium and computer device provided by the embodiments of the present application. Specific examples are used in this text to explain the principles and implementation methods of application. The descriptions of the above embodiments are only used to help understand the method and its core idea of this application. At the same time, for those skilled in the art, according to the idea of the present application, there will be changes in the specific implementation method and application scope. In summary, the content of this specification should not be understood as a limitation to the present application.

## Claims

1. A method for file processing, comprising:
obtaining an original file to be transmitted;
converting the original file into bytes to obtain a byte array;
saving data from the byte array onto a canvas through one-channel storage method, two-channel storage method and three-channel storage method respectively, and compressing the data using compression method supported by the canvas to obtain compressed one-channel data, two-channel data and three-channel data, wherein the canvas is configured to display multiple pixels;
determining data with smallest data volume among the one-channel data, the two-channel data, the three-channel data and the byte array as data to be encrypted corresponding to the byte array; and
performing encryption processing on the data to be encrypted to obtain encrypted data of the original file.

2. The method according to claim 1, wherein after the obtaining a byte array, the method further comprises:
splitting data in the byte array according to maximum fillable body data supported by the canvas to obtain at least one single-block byte array;
wherein the saving data from the byte array to a canvas through one-channel storage method, two-channel storage method and three-channel storage method respectively, and compressing the data using compression method supported by the canvas to obtain compressed one-channel data, two-channel data and three-channel data comprises:
saving the data in each of the at least one single-block byte arrays to the canvas according to the one-channel storage method, the two-channel storage method and the three-channel storage method respectively, and compressing the data through the compression method supported by the canvas to obtain compressed one-channel data, two-channel data and three-channel data of each of the at least one single-block byte array;
wherein the determining data with smallest data volume among the one-channel data, the two-channel data, the three-channel data and the byte array as data to be encrypted corresponding to the byte array comprises: determining the data with the smallest data volume among the compressed one-channel data, two-channel data, three-channel data of each of the at least one single-block byte array in the byte array and the data of each of the at least one single-block byte array, as the data to be encrypted corresponding to each of the at least one single-block byte array in the byte array;
wherein the performing encryption processing on the data to be encrypted to obtain encrypted data of the original file comprises: performing the encryption processing on the data to be encrypted corresponding to each of the at least one single-block byte array in the byte array to obtain the encryption data corresponding to each of the at least one single-block byte array of the original file.

3. The method according to claim 2, wherein the saving the data in each of the at least one single-block byte arrays to the canvas according to the one-channel storage method, the two-channel storage method and the three-channel storage method respectively, comprises:
for each of the at least one single-block byte arrays, determining one or more target storage channels for saving each of the at least one single-block array according to the one-channel storage method, the two-channel storage method and the three-channel storage method, wherein the one or more target storage channels corresponding to the one-channel storage method comprise any one of the red ( R ), green ( G ) and blue ( B ) channels, the target storage channel corresponding to the two-channel storage method comprise any two of the R, G and B channels, the target storage channel corresponding to the three-channel storage method comprise the R, G and B channels;
writing the target storage channel into an identification code of each of the at least one single-block byte array, and filling the identification code into a first pixel of the canvas; and
saving the data in each of the at least one single-block byte array to the target storage channel corresponding to other pixels of the canvas in order.

4. The method according to claim2, wherein the splitting data in the byte array according to maximum fillable body data supported by the canvas to obtain at least one single-block byte array, comprises:
determining a number of blocks to be split according to maximum fillable body data supported by the canvas and the size of the byte array, the maximum fillable body data supported by the canvas is at least related to a displacement multiple; and
Splitting the data in the byte array according to the number of blocks to obtain the at least one single-block byte array.

5. The method according to claim2, wherein the performing the encryption processing on the data to be encrypted corresponding to each of the at least one single-block byte array in the byte array to obtain the encryption data of the original file, comprises:
obtaining a key array, a position transformation array and a displacement multiple, which are used for encryption, wherein the position transformation array is obtained by sorting the key array; and
performing encryption processing on the data to be encrypted corresponding to each of the at least one single-block byte array in the byte array according to the displacement multiple, the key array, and the position transformation array, to obtain the encrypted data of the original file.

6. The method according to claim 5, wherein the performing encryption processing on the data to be encrypted corresponding to each of the at least one single-block byte array in the byte array according to the displacement multiple, the key array, and the position transformation array, to obtain the encrypted data of the original file, comprises:
for the date to be encrypted corresponding to each of the at least one single-block byte array in the byte array, mapping each data value in the key array to a corresponding row or column of the data to be encrypted according to the displacement multiple;
determining position information of each the data value in the position transformation array, and determining a target row or a target column according to the position information and the displacement multiple; and
exchanging data in the corresponding row or column of the data to be encrypted with data in the target row or target column.

7. The method according to claim 5, wherein the obtaining the displacement multiple, comprises:
obtaining a size of the original file, a maximum number of bytes supported by the canvas and a determined maximum number of blocks;
determining a maximum processable file size when the displacement multiple is equal to 1 according to the size, the maximum number of bytes and the maximum number of blocks; and
determining the displacement multiple according to the size of the original to be transmitted and the maximum processable file size.

8. The method according to claim 5, wherein the obtaining a key array, a position transformation array, comprises:
obtaining plaintext of the encryption key, and encrypting the plaintext of the encryption key using a preset encryption algorithm to obtain ciphertext of the key;
converting the ciphertext of the key to a byte array to obtain the key array; and
sorting data in the key array in a preset order, and taking an array used to save a position of each of the data in the key array after sorting as the position transformation array.

9. The method according to claim 2, wherein after obtaining the data to be encrypted corresponding to each of the at least one single-block byte array in the byte array, comprises:
for the data to be encrypted, determining a number of bytes of blank padding data to be filled and the blank padding data to be filled; and
filling the data to be encrypted with the blank padding data of the number of bytes of blank padding data at the end to obtain filled data to be encrypted.

10. The method according to claim 9, wherein the for the data to be encrypted, determining a number of bytes of blank padding data to be filled, comprises:
determining a fixed number of rows of the canvas according to the displacement multiple;
determining a minimum width of the canvas according to the data to be encrypted and the fixed number of rows; and
determining the number of bytes of blank padding data to be filled according to the minimum width of the canvas, the displacement, and the data to be encrypted.

11. The method according to claim 2, wherein the method further comprises:
writing a file type into the identification code of each of the at least one single-block byte array; and/or
wherein after splitting data in the byte array, the method further comprises:
writing a block index into the identification code of each of the at least one single-block byte array.

12. The method according to any one of claims 1-11, wherein after obtaining encrypted data of the original file, the method further comprises:
exporting the encrypted data in form of an image and transmitting the image; or writing the encrypted data into a text file and transmitting the text file.

13. A method for file processing, comprising:
obtaining encryption data of an original file, wherein the encryption data is obtained by: converting the original file into bytes, and after obtaining a byte array, saving data from the byte array onto a canvas through one-channel storage method, two-channel storage method and three-channel storage method respectively, and compressing the data using compression method supported by the canvas to obtain compressed one-channel data, two-channel data and three-channel data; determining data with smallest data volume among the one-channel data, the two-channel data, the three-channel data and the byte array as data to be encrypted corresponding to the byte array; and performing encryption processing on the data to be encrypted;
decrypting the encrypted data to obtain decrypted data of the original file;
when the decrypted data has been compressed, writing the decrypted data into a canvas for decompression to obtain a byte array corresponding to the encrypted data; and
converting the byte array according to a file type to obtain the original file.

14. The method according to claim 13, wherein,
obtaining at least one block of the encrypted data corresponding to the original file;
decrypting each of the at least one block of the encrypted data to obtain decrypted data for each the block;
when the decrypted data for a corresponding block has been compressed, writing the decrypted data for a corresponding block into the canvas for decompression to obtain a single-block byte array corresponding to the decrypted data for the corresponding block;
when the decrypted data for the corresponding block has not been compressed, directly determining the corresponding single-block byte array according to the decrypted data for the corresponding block;
concatenating each the single-block byte array in sequence to obtain the byte array; and
converting the byte array according to the file type to obtain the original file.

15. The method according to claim 14, wherein the writing the decrypted data into a canvas for decompression to obtain a byte array corresponding to the encrypted data, comprises:
writing the decrypted data for a corresponding block into the canvas for compression to obtain initial restored data corresponding to the decrypted data for a corresponding block;
removing an identification code and/or blank padding data from the initial restored data; and
obtaining a target storage channel corresponding to the initial restored data from the identification code, and extracting data from the target storage channel in the canvas to obtain the single-block byte array corresponding to the decrypted data for a corresponding block.

16. The method according to claim 14, wherein the decrypting each of the at least one block of the encrypted data to obtain decrypted data for each the block, comprises:
obtaining a displacement multiple, a reversed key array and a reversed position transformation array, wherein the reversed position transformation array is determined according to the reversed key array; and
decrypting each the block of the encrypted data in the at least one block of the encrypted data according to the displacement, the reversed key array, and the reversed position transformation array to obtain the decrypted data for each the block.

17. The method according to claim 16, wherein the obtaining a reversed key array and a reversed position transformation array, comprises:
obtaining plaintext of an encryption key, and encrypting the plaintext of the encryption key using a preset encryption algorithm to obtain ciphertext of the key;
converting the ciphertext of the key into a byte array to obtain a key array;
sorting data in the key array in a preset order, and using array that stores a position of each data in the key array after sorting as a position transformation array; and
reversing the data in the key array and the position transformation array to obtain the reversed key array and the reversed position transformation array respectively.

18. A device for file processing, comprising:
a first acquisition module, configured to obtaining an original file to be transmitted;
a byte conversion module, configured to converting the original file into bytes to obtain a byte array;
a compression module, configured to saving data from the byte array onto a canvas through one-channel storage method, two-channel storage method and three-channel storage method respectively, and compressing the data using compression method supported by the canvas to obtain compressed one-channel data, two-channel data and three-channel data;
a data determination module, configured to determining data with smallest data volume among the one-channel data, the two-channel data, the three-channel data and the byte array as data to be encrypted corresponding to the byte array;
an encryption module, configured to performing encryption processing on the data to be encrypted to obtain encrypted data of the original file.

19. A computer-readable storage medium, wherein a plurality of instructions are stored in the computer readable storage medium, the instructions being adapted to be loaded by a processor to perform operations of the file processing method according to any one of claims 1 to 17.

20. A computer equipment, wherein the computer equipment comprises a processor and a memory, the processor being electrically connected with the memory, the memory being configured to store instructions and data, and the processor being configured to perform operations of the file processing method according to any one of claims 1 to 17.
